(19) 　Europäisches Patentamt
European Patent Office
Office européen des brevets

(11)　**EP 4 626 086 A1**

(12)　**EUROPEAN PATENT APPLICATION**
published in accordance with Art. 153(4) EPC

(43) Date of publication:
　01.10.2025　Bulletin 2025/40

(21) Application number: 23914905.7

(22) Date of filing: 04.10.2023

(51) International Patent Classification (IPC):
　*H04W 52/02* (2009.01)　　*H04W 24/08* (2009.01)
　*H04W 72/04* (2023.01)　　*H04L 5/00* (2006.01)
　*H04W 92/20* (2009.01)

(52) Cooperative Patent Classification (CPC):
　H04L 5/00; H04W 24/08; H04W 52/02;
　H04W 72/04; H04W 92/20

(86) International application number:
　PCT/KR2023/015266

(87) International publication number:
　WO 2024/147441 (11.07.2024 Gazette 2024/28)

(84) Designated Contracting States:
　AL AT BE BG CH CY CZ DE DK EE ES FI FR GB
　GR HR HU IE IS IT LI LT LU LV MC ME MK MT NL
　NO PL PT RO RS SE SI SK SM TR
　Designated Extension States:
　BA
　Designated Validation States:
　KH MA MD TN

(30) Priority:　06.01.2023　KR 20230002440

(71) Applicant: Samsung Electronics Co., Ltd.
　Suwon-si, Gyeonggi-do 16677 (KR)

(72) Inventor: KIM, Gihyun
　Suwon-si Gyeonggi-do 16677 (KR)

(74) Representative: Gulde & Partner
　Patent- und Rechtsanwaltskanzlei mbB
　Berliner Freiheit 2
　10785 Berlin (DE)

(54)　**ELECTRONIC DEVICE AND METHOD FOR OPERATING CARRIER IN BASE STATION SYSTEM**

(57)　This method performed by a distributed unit (DU) may include the processes of: identifying frequency bands for providing communication services in sectors; identifying a plurality of radio units (RUs) configured to cover the frequency bands; identifying, among the plurality of RUs, a first RU for which predicted load information indicates a load below an off-threshold, on the basis of the priority of each frequency band; and transmitting, to the first RU, a first control signal for deactivating the first RU.

FIG. 6

EP 4 626 086 A1

**Description**

**[Technical Field]**

The disclosure relates to an electronic device and method for operating a carrier in a base station of a communication system.

**[Background Art]**

In a mobile communication network, a service area provided by a base station may be divided into a plurality of sectors. The base station may provide a service in a sector (area) of the plurality of sectors through one or more frequency bands.
The above-described information may be provided as a related art for the purpose of helping to understand the disclosure. No claim or determination is raised as to whether any of the above-described contents may be applied as a prior art related to the disclosure.

**[Disclosure]**

**[Technical Solution]**

According to an aspect of the disclosure, a method performed by a distributed unit (DU), includes: identifying frequency bands for providing a communication service in a sector; identifying a plurality of radio units (RUs) for providing the frequency bands; identifying, based on a priority of each frequency band, a first RU of which prediction load information is less than an off-threshold, among the plurality of RUs; and transmitting, to the first RU, a first control signal for disabling the first RU.
According to an aspect of the disclosure, an electronic device of a distributed unit (DU), the electronic device includes: a memory; at least one transceiver; at least one processor operatively connected to the memory and the at least one transceiver, wherein the at least one processor is configured to: identify frequency bands for providing a communication service in a sector; identify a plurality of radio units (RUs) configured to provide the frequency bands; identify, based on a priority of each frequency band, a first RU of which prediction load information is less than an off-threshold, among the plurality of RUs; and transmit, to the first RU, a first control signal for disabling the first RU.

**[Description of the Drawings]**

The above and other aspects, features, and advantages of certain embodiments of the disclosure will be more apparent from the following description taken in conjunction with the accompanying drawings, in which:

FIG. 1 illustrates a wireless communication system;
FIG. 2 illustrates a fronthaul interface;
FIG. 3A illustrates a functional configuration of a distributed unit (DU);
FIG. 3B illustrates a functional configuration of a radio unit (RU);
FIG. 4 illustrates an example of a function split between a DU and an RU;
FIG. 5 illustrates an example of a service area by a DU and a plurality of RUs;
FIG. 6 illustrates an example of signaling for controlling an RU based on prediction load information;
FIG. 7 illustrates an operation flow of a DU for disabling an RU based on prediction load information; and
FIG. 8 illustrates an operation flow of a DU for enabling an RU based on prediction load information.

**[Mode for Invention]**

The terms used in the disclosure are only used to describe a specific embodiment, and may not be intended to limit the scope of other embodiments. Singular expressions may include plural expressions unless the context clearly indicates otherwise. The terms used herein, including technical or scientific terms, may have the same meaning as commonly understood by those having ordinary knowledge in the art which the disclosure describes. Among the terms used in the disclosure, terms defined in a general dictionary may be interpreted as having the same or similar meaning as those in the context of the related art, and are not interpreted in an ideal or excessively formal meaning unless clearly defined in the disclosure. In some cases, even terms defined in the disclosure cannot be interpreted to exclude embodiments of the disclosure.
In one or more embodiments of the disclosure described below, a hardware access method will be described as an example. However, since one or more embodiments of the disclosure include art using both hardware and software, one or more embodiments of the disclosure do not exclude a software-based access method.

Terms in a signal (e.g., signal, information, message, and signaling), terms in a resource (e.g., frequency band, carrier, cell, bandwidth, and physical resource block (PRB)), terms in an operational state (e.g., step, operation, and procedure), terms in data (e.g., packet, user stream, information, bit, symbol, and codeword), terms in a channel, terms in network entities, terms in component of a device, and the like used in the following description are illustrated. Accordingly, the disclosure is not limited to terms to be described below, and other terms having an equivalent technical meaning may be used.

In addition, in the disclosure, an expression of greater than or less than may be used to determine whether a specific condition is satisfied or fulfilled, but this is only a description for expressing an example and does not exclude description of greater than or equal to or less than or equal to. Conditions described as "greater than or equal to" may be replaced with "greater than", conditions described as "less than or equal to" may be replaced with "less than", and conditions described as "greater than or equal to and less than" may be replaced with "greater than and less than or equal to". In addition, hereinafter, 'A' to 'B' means at least one of the elements from A (including A) to B (including B). Hereinafter, 'C' and/or 'D' means including at least one of 'C' or 'D', that is, {'C', 'D', 'C' and 'D'}.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. Similarly, the term "set" means one or more. Accordingly, the set of items may be a single item or a collection of two or more items.

Although the disclosure describes one or more embodiments by using terms used in some communication standards (e.g., 3rd Generation Partnership Project (3GPP), extensible radio access network (xRAN), and open-radio access network (O-RAN)), this is only an example for description. One or more embodiments of the disclosure may be easily modified and applied, even in other communication systems.

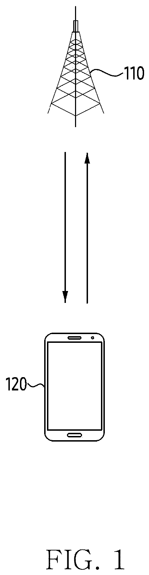

FIG. 1 illustrates a wireless communication system. FIG. 1 illustrates a base station 110 and a terminal 120 as part of nodes using a wireless channel in a wireless communication system. Although FIG. 1 illustrates only one base station, the wireless communication system may further include another base station identical or similar to the base station 110.

The base station 110 is a network infrastructure that provides wireless access to the terminal 120. The base station 110 has coverage defined based on a distance over which a signal may be transmitted. In addition to the base station, the base station 110 may be referred to as ' access point (AP)', 'eNodeB (eNB)', '5th generation node', 'next generation nodeB (gNB)', 'wireless point', ' transmission/reception point (TRP)', or other terms having equivalent technical meanings.

The terminal 120 is a device used by a user and performs communication with the base station 110 through a wireless channel. A link facing toward the terminal 120 from the base station 110 is referred to as a downlink (DL), and the link facing toward the base station 110 from the terminal 120 is referred to as an uplink (UL). In addition, although not illustrated in FIG. 1, the terminal 120 and another terminal may perform communication through a mutual wireless channel. At this time, a link between the terminal 120 and the other terminal (device-to-device link (D2D)) is referred to as a sidelink, and the sidelink may be used interchangeably with a PC5 interface. In some other embodiments, the terminal 120 may be operated without user involvement. According to an embodiment, the terminal 120 is a device that performs machine type communication (MTC) and may not be carried by a user. In addition, according to an embodiment, the terminal 120 may be a narrowband (NB)-Internet of Things (IoT) device.

In addition to the terminal, the terminal 120 may be referred to as 'user equipment (UE)', 'customer premises equipment (CPE)', 'mobile station', 'subscriber station', 'remote terminal', 'wireless terminal', 'electronic device', 'user device' or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) and FR3 of NR), and a mmWave band (e.g., 28 GHz, 30 GHz, 38 GHz, and 60 GHz). In order to improve the channel gain, the base station 110 and the terminal 120 may perform beamforming. Herein, the beamforming may include transmission beamforming and reception beamforming. The base station 110 and the terminal 120 may give directivity to a transmission signal or a reception signal. For this purpose, the base station 110 and the terminal 120 may select serving beams through a beam search or beam management procedure. After the serving beams are selected, subsequent communication may be performed through a resource that has a QCL relationship with a resource that transmits the serving beams.

When large-scale characteristics of a channel that delivered a symbol on a first antenna port may be inferred from a channel that delivered a symbol on a second antenna port, the first antenna port and the second antenna port may be evaluated to have the QCL relationship. For example, the large-scale characteristics may include at least one of delay spread, Doppler spread, Doppler shift, average gain, average delay, and spatial receiver parameter.

FIG. 1 illustrates that both the base station 110 and the terminal 120 perform beamforming, but embodiments of the disclosure are not necessarily limited thereto. In some embodiments, the terminal may or may not perform beamforming. In addition, the base station may or may not perform beamforming. In other words, only one of the base station and the terminal may perform beamforming, or both of the base station and the terminal may not perform beamforming.

In the disclosure, a beam means a spatial flow of a signal in the wireless channel, and is formed by one or more antennas (or antenna elements), and this formation process may be referred to as beamforming. The beamforming may include at least one of analog beamforming or digital beamforming (e.g., precoding). A reference signal transmitted based on the beamforming may include, for example, demodulation-reference signal (DM-RS), channel state information-reference signal (CSI-RS), synchronization signal/physical broadcast channel (SS/PBCH), and sounding reference signal (SRS). In addition, as a configuration for each reference signal, an IE such as a CSI-RS resource or an SRS-resource may be used, and this configuration may include information associated with the beam. The information associated with the beam may mean whether the corresponding configuration (e.g., CSI-RS resource) uses a same spatial domain filter as other configuration (e.g., other CSI-RS resource within the same CSI-RS resource set) or a different spatial domain filter, or what reference signal it is quasi-co-located (QCL) with, and when QCLed, what type (e.g., QCL type A, B, C, and D) it is.

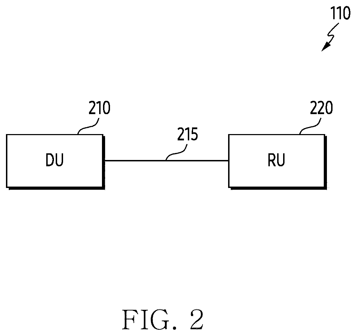

In the related art, in a communication system with a relatively large cell radius of a base station, each base station was installed so that each base station includes functions of a digital processing unit (or distributed unit (DU)) and a radio frequency (RF) processing unit (or radio unit (RU)). However, as a high frequency band is used in a 4th generation (4G) and/or a subsequent communication system (e.g., 5G), and cell coverage of the base station decreases, a number of base stations to cover a specific area has increased. The installation cost burden of operators for installing base stations has also increased. In order to minimize the installation cost of the base station, a structure in which one or more RUs are connected to one DU through a wired network by separating the DU and RU of the base station, and one or more geographically distributed RUs are disposed to cover the specific area has been proposed. Hereinafter, a deployment structure and extension examples of the base station according to one or more embodiments of the disclosure will be described with reference to FIG. 2.

FIG. 2 illustrates a fronthaul interface according to embodiments. Unlike a backhaul between a base station and a core network, the fronthaul refers to entities between a radio access network and the base station. FIG.2 illustrates an example of a fronthaul structure between a DU 210 and one RU 220, but the disclosure is not limited thereto. An embodiment of the disclosure may also be applied to a fronthaul structure between one DU and a plurality of RUs. For example, an embodiment of the disclosure may be applied to a fronthaul structure between one DU and two RUs. For example, an embodiment of the disclosure may be applied to a fronthaul structure between one DU and three RUs.

In FIG. 2, a base station 110 may include the DU 210 and the RU 220.

A fronthaul 215 between the DU 210 and the RU 220 may be operated through an Fx interface. For operation of the fronthaul 215, interfaces such as, for example, common public radio interface (CPRI), enhanced common public radio interface (eCPRI), and radio over Ethernet (ROE) may be used.

As communication technology developed, mobile data traffic increased, and accordingly, a bandwidth requirement required by the fronthaul between a digital unit and a wireless unit increased significantly. In a deployment such as a centralized/cloud radio access network (C-RAN), the DU 210 may be implemented to perform functions for packet data convergence protocol (PDCP), radio link control (RLC), media access control (MAC), and physical (PHY), and the RU 220 may be implemented to further perform functions for a PHY layer in addition to a radio frequency (RF) function.

The DU 210 may be in charge of an upper layer function of the wireless network. For example, the DU 210 may perform a function of an MAC layer and a part of the PHY layer. Herein, the part of the PHY layer is performed at an upper level among the functions of the PHY layer, and may include, for example, channel encoding (or channel decoding), scrambling (or descrambling), modulation (or demodulation), and layer mapping (or layer de-mapping). According to an embodiment, in case that the DU 210 complies with an O-RAN standard, it may be referred to as an O-RAN DU (O-DU). The DU 210 may be represented by being replaced with a first network entity for a base station (e.g., gNB) in embodiments of the disclosure, when necessary.

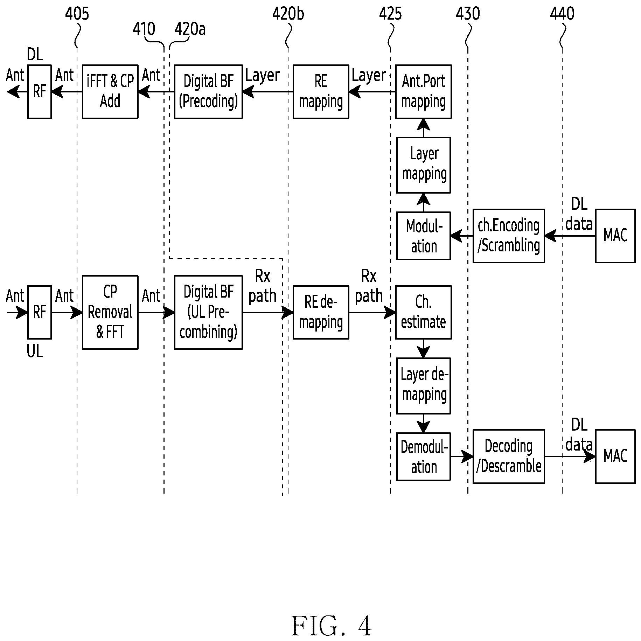

The RU 220 may be in charge of a lower layer function of the wireless network. For example, the RU 220 may perform a part of the PHY layer and the RF function. Herein, the part of the PHY layer is performed at a relatively lower level than the DU 210 among the functions of the PHY layer, and may include, for example, inverse fast Fourier transform (iFFT) conversion (or FFT conversion), CP insertion (or CP removal), and digital beamforming. An example of this specific functional separation will be described in detail in FIG. 4. The RU 220 may be referred to as 'access unit (AU)', 'access point (AP)', 'transmission/reception point (TRP)', 'remote radio head (RRH)', 'radio unit (RU)', or other terms having equivalent technical meaning. According to an embodiment, in case that the RU 220 complies with the O-RAN standard, it may be referred to as an O-RAN RU (O-RU). The RU 220 may be represented by being replaced with a second network entity for the base station (e.g., gNB) in embodiments of the disclosure, when necessary.

Although the base station 110 has been described as including the DU 210 and the RU 220 in FIG. 2, the embodiments of the disclosure are not limited thereto. The base station according to embodiments may be implemented as a distributed deployment according to an centralized unit (CU) configured to perform functions of upper layers (e.g., packet data convergence protocol (PDCP) and radio resource control (RRC)) of an access network and a distributed unit (DU) configured to perform functions of lower layers. For example, between a core (e.g., 5G core (5GC) or next generation core (NGC)) and the wireless network, the base station may be implemented in a structure in which the CU, DU, and RU are disposed in order. In order to describe the relationship between the DU and RU, an expression of a digital unit (DU) is sometimes used, but in the disclosure, a description of the digital unit (DU) may be understood as a description of the distributed unit (DU). An interface between the CU and the distributed unit (DU) may be referred to as an F1 interface.

The centralized unit (CU) may be in charge of the upper layer function than the DU by being connected to one or more DUs. For example, the CU may be in charge of the radio resource control (RRC) and packet data convergence protocol (PDCP) layer functions, and the DU and the RU may be in charge of lower layer functions. The DU may perform some functions (high PHY) of the radio link control (RLC), media access control (MAC), and physical (PHY) layer, and the RU may be in charge of the remaining functions (low PHY) of the PHY layer. For example, the digital unit (DU) may be included in the distributed unit (DU) according to the distributed deployment implementation of the base station. Hereinafter, unless otherwise defined, operations of the distributed unit (DU) and the RU will be described, but embodiments of the disclosure may be applied to both the base station deployment including the CU or the deployment in which the DU is directly connected to the core network (i.e., the CU and the DU are integrated and implemented into a base station (e.g., NG-RAN node) that is one entity).

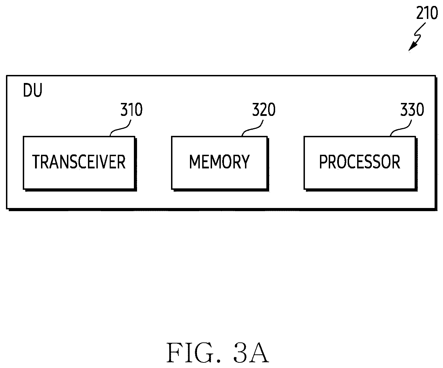

FIG. 3A illustrates a functional configuration of a distributed unit (DU) according to embodiments. The configuration illustrated in FIG. 3A may be understood as a configuration of the DU 210 of FIG. 2 as a part of a base station. Terms such as '...unit', '...er', and the like used below means a unit that processes at least one function or operation, which may be implemented by hardware or software, or a combination of hardware and software.

In FIG. 3A, the DU 210 includes a transceiver 310, a memory 320, and a processor 330.

The transceiver 310 may perform functions for transmitting and receiving a signal in a wired communication environment. The transceiver 310 may include a wired interface for controlling a direct connection between devices through a transmission medium (e.g., copper wire or optical fiber). For example, the transceiver 310 may transmit the electrical signal to another device through a copper wire or may perform conversion between an electrical signal and an optical signal. The DU 210 may perform communication with a radio unit (RU) through the transceiver 310. The DU 210 may be connected to a core network or a CU in a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer standard of the system. For example, when transmitting data, the transceiver 310 generates complex symbols by encoding and modulating a transmission bit string. In addition, when receiving data, the transceiver 310 restores a received bit string by demodulating and decoding the baseband signal. In addition, the transceiver 310 may include a plurality of transmission/reception paths. In addition, according to an embodiment, the transceiver 310 may be connected to the core network or to other nodes (e.g., integrated access backhaul (IAB)).

The transceiver 310 may transmit and receive a signal. The transceiver 310 may transmit a signal to another network entity (e.g., the RU 220) or receive a signal. For example, the transceiver 310 may transmit a management plane (M-plane) message. For example, the transceiver 310 may transmit a synchronization plane (S-plane) message. For example, the transceiver 310 may transmit or receive a control plane (C-plane) message. For example, the transceiver 310 may transmit or receive a user plane (U-plane) message. Although only the transceiver 310 is illustrated in FIG. 3A, according to another implementation example, the DU 210 may include two or more transceivers.

The transceiver 310 transmits and receives a signal as described above. Accordingly, all or part of the transceiver 310 may be referred to as a 'communication part', a 'transmission part', a 'reception part', or a 'transmission/reception part'. In addition, in the following description, transmission and reception performed through a wireless channel are used to mean that the above-described processing is performed by the transceiver 310.

Although not shown in FIG. 3A, the transceiver 310 may further include a backhaul transceiver for connecting to the core network or the other base station. The backhaul transceiver provides an interface for communicating with other nodes in the network. That is, the backhaul transceiver converts the bit string transmitted from the base station to another node, for example, another access node, another base station, an upper node, the core network, and the like into a physical signal, and converts the physical signal received from the other node into the bit string.

The memory 320 stores data such as a basic program, an application program, and setting information for operation of the DU 210. The memory 320 may be referred to as a storage part. The memory 320 may be configured as a volatile memory, a nonvolatile memory, or a combination of the volatile memory and the nonvolatile memory. Also, the memory 320 provides the stored data according to a request of the processor 330.

The processor 330 controls overall operations of the DU 210. The processor 380 may be referred to as a control part. For example, the processor 330 transmits and receives a signal through the transceiver 310 (or through the backhaul communication part). In addition, the processor 330 records and reads data in the memory 320. Also, the processor 330 may perform functions of a protocol stack required by a communication standard. Although only the processor 330 is illustrated in FIG. 3A, according to another implementation example, the DU 210 may include two or more processors.

The configuration of the DU 210 illustrated in FIG. 3A is only an example, and the example of the DU performing embodiments of the disclosure is not limited from the configuration illustrated in FIG. 3A. In some embodiments, some configurations may be added, deleted, or changed.

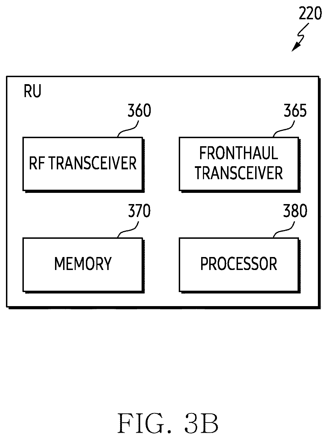

FIG. 3B illustrates a functional configuration of a radio unit (RU) according to embodiments. The configuration illustrated in FIG. 3B may be understood as a configuration of the RU 220 of FIG. 2 as a part of a base station. Terms such as '...part', '...er', and the like used below means a unit that processes at least one function or operation, which may be implemented by hardware or software, or a combination of hardware and software.

In FIG. 3B, the RU 220 includes an RF transceiver 360, a fronthaul transceiver 365, a memory 370, and a processor 380.

The RF transceiver 360 performs functions for transmitting and receiving a signal through a wireless channel. For example, the RF transceiver 360 upconverts a baseband signal into an RF band signal, transmits it through an antenna, and down-converts the RF band signal received through the antenna into the baseband signal. For example, the RF transceiver 360 may include a transmission filter, a reception filter, a power amplifier, a mixer, an oscillator, a digital-to-analog converter (DAC), an analog-to-digital converter (ADC), and the like.

The RF transceiver 360 may include a plurality of transmission/reception paths. Furthermore, the RF transceiver 360 may include an antenna part. The RF transceiver 360 may include at least one antenna array configured with a plurality of antenna elements. In terms of hardware, the RF transceiver 360 may be configured as a digital circuit and an analog circuit (e.g., a radio frequency integrated circuit (RFIC)). Herein, the digital circuit and the analog circuit may be implemented in one package. In addition, the RF transceiver 360 may include a plurality of RF chains. The RF transceiver 360 may perform beamforming. The RF transceiver 360 may apply a beamforming weight to a signal for giving directionality according to the setting of the processor 380 to the signal to be transmitted and received. According to an embodiment, the RF transceiver 360 may include a radio frequency (RF) block (or RF part).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., a cell-specific reference signal (CRS), a demodulation (DM)-RS), system information (e.g., MIB, SIB, remaining system information (RMSI), other system information (OSI)), a configuration message, control information, or downlink data. For example, the RF transceiver 360 may receive an uplink signal. The uplink signal may include a random access related signal (e.g., random access preamble (RAP) (or message 1 (Msg1) or message 3 (Msg3)), a reference signal (e.g., sounding reference signal (SRS), DM-RS), or power headroom report (PHR). Although only the RF transceiver 360 is illustrated in FIG. 3B, according to another implementation example, the RU 220 may include two or more RF transceivers.

The fronthaul transceiver 365 may transmit and receive a signal. The fronthaul transceiver 365 may transmit a signal to another network entity (e.g., the DU 210) or receive a signal. The fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may transmit or receive a control plane (C-plane) message. For example, the fronthaul transceiver 365 may transmit or receive a user plane (U-plane) message. Although only the fronthaul transceiver 365 is illustrated in FIG. 3B, according to another implementation example, the RU 220 may include two or more fronthaul transceivers.

The RF transceiver 360 and the fronthaul transceiver 365 transmit and receive a signal as described above. Accordingly, all or part of the RF transceiver 360 and the fronthaul transceiver 365 may be referred to as a 'communication part', a 'transmission part', a 'reception part' or a 'transmission/reception part'. In addition, in the following description, transmission and reception performed through the wireless channel are used to mean that the above-described processing is performed by the RF transceiver 360. In the following description, transmission and reception performed through the wireless channel are used to mean that the above-described processing is performed by the RF transceiver 360.

The memory 370 stores data such as a basic program, an application program, and setting information for an operation of the RU 220. The memory 370 may be referred to as a storage part. The memory 370 may be configured as a volatile memory, a nonvolatile memory, or a combination of the volatile memory and the nonvolatile memory. Also, the memory 370 provides the stored data according to a request of the processor 380. According to an embodiment, the memory 370 may include a memory for a condition, an instruction, or a setting value related to an SRS transmission method.

The processor 380 controls overall operations of the RU 220. The processor 380 may be referred to as a control part. For example, the processor 380 transmits and receives a signal through the RF transceiver 360 or the fronthaul transceiver 365. In addition, the processor 380 records and reads data in the memory 370. Also, the processor 380 may perform functions of a protocol stack required by a communication standard. Although only the processor 380 is illustrated in FIG. 3B, according to another implementation example, the RU 220 may include two or more processors. The processor 380 is an instruction set or code stored in the memory 370, which is an instruction/code that is at least temporarily resided in the processor 380, or a storage space that stores the instruction/code, or may be a part of circuitry that configures the processor 380. In addition, the processor 380 may include various modules for performing communication. The processor 380 may control the RU 220 to perform operations according to embodiments described below.

The configuration of the RU 220 illustrated in FIG. 3B is only an example, and the example of the RU performing embodiments of the disclosure is not limited from the configuration illustrated in FIG. 3B. In some embodiments, some configurations may be added, deleted, or changed.

FIG. 4 illustrates an example of a function split between a DU and an RU. As wireless communication technology develops (e.g., introduction of a 5th generation (5G) communication system or a new radio (NR) communication system), a frequency band used has further increased. As a cell radius of a base station becomes very small, the number of RUs required to be installed further increased. In addition, in the 5G communication system, the amount of data transmitted increased by more than 10 times, and the transmission capacity of a wired network transmitted to the fronthaul increased significantly. Due to the above-described factors, the installation cost of the wired network in the 5G communication system may increase very significantly. Therefore, in order to lower the transmission capacity of the wired network and reduce the installation cost of the wired network, a 'function split' may be used to lower the transmission capacity of the fronthaul by transferring some functions of the modem of the DU to the RU.

In order to reduce the burden of the DU, the role of the RU, which is in charge of only the existing RF function, may be extended to some functions of the physical layer. As the RU performs functions of an upper layer, the throughput of the RU increases, so that the transmission bandwidth in the fronthaul increases, and at the same time, the constraint of latency requirement due to response processing may be lowered. On the other hand, as the RU performs the functions of the upper layer, the virtualization gain decreases, and the size, weight, and cost of the RU increase. Considering the trade-off of the advantages and disadvantages described above, it is required to implement an optimal functional separation.

In FIG. 4, functional separations in a physical layer below a MAC layer are illustrated. In a case of downlink (DL) transmitting a signal to a terminal through a wireless network, the base station may sequentially perform channel encoding/scrambling, modulation, layer mapping, antenna mapping, RE mapping, digital beamforming (e.g., precoding), inverse fast Fourier transform (iFFT) conversion/CP insertion, and RF conversion. In a case of uplink (UL) receiving a signal from a terminal through a wireless network, the base station may sequentially perform RF conversion, FFT conversion/CP removal, digital beamforming (pre-combining), RE demapping, channel estimation, layer demapping, demodulation, and decoding/descrambling. Split of uplink functions and downlink functions may be defined in various types according to the necessity between vendors, discussion on standards, and the like according to the trade-off described above.

In a first function split 405, the RU performs the RF function, and the DU performs a PHY function. The first function split is that the PHY function in the RU is not substantially implemented, and may be referred to as Option 8, for example. In a second function split 410, the RU performs iFFT conversion/CP insertion on the DL and FFT conversion/CP removal on the UL of the PHY function, and the DU performs the remaining PHY functions. For example, the second function split 410 may be referred to as Option 7-1. In a third function split 420a, the RU performs iFFT conversion/CP insertion on the DL and FFT conversion/CP removal and digital beamforming on the UL of the PHY function, and the DU performs the remaining PHY functions. For example, the third function split 420a may be referred to as Option 7-2x Category A. In a fourth function split 420b, the RU performs up to digital beamforming in both DL and UL, and the DU performs the upper PHY functions after the digital beamforming. For example, the fourth function split 420b may be referred to as Option 7-2x Category B. In a fifth function split 425, the RU performs up to RE mapping (or RE demapping) in both DL and UL, and the DU performs the upper PHY functions after the RE mapping (or RE demapping). For example, the fifth function split 425 may be referred to as Option 7-2. In a sixth function split 430, the RU performs modulation (or demodulation) in both DL and UL, and the DU performs the upper PHY functions after the modulation (or demodulation). For example, the sixth function split 430 may be referred to as Option 7-3. In a seventh function split 440, the RU performs up to encoding/scrambling (or decoding/descrambling) in both DL and UL, and the DU performs the upper PHY functions after the encoding/scrambling (or decoding/descrambling). For example, the seventh function split 440 may be referred to as Option 6.

According to an embodiment, in case that a large capacity signal processing is expected, such as FR 1 MMU, a function split in a relatively high layer (e.g., the fourth function split 420b) may be required to reduce fronthaul capacity. In addition, function split at a too high layer (e.g., the sixth function split 430) may cause a burden on the implementation of the RU by complicating the control interface and including a large number of PHY processing blocks in the RU, so proper function split may be required according to the deployment and implementation method of the DU and RU.

According to an embodiment, in case that precoding of data received from the DU cannot be processed (i.e., in case that there is a limit to the precoding capability of the RU), the third function split 420a or lower function split (e.g., the second function split 410) may be applied. Conversely, in case that it has the ability to process precoding of data received from the DU, the fourth function split 420b or higher function split (e.g., the sixth function split 430) may be applied.

Hereinafter, an upper-PHY means physical layer processing processed in the DU of the fronthaul interface. For example, the upper-PHY may include forward error correction (FEC) encoding/decoding, scrambling, and modulation/-demodulation. Hereinafter, a lower-PHY means physical layer processing processed in the RU of the fronthaul interface. For example, the lower-PHY may include FFT/iFFT, digital beamforming, physical random access channel (PRACH) extraction and filtering. However, the above-described criterion does not exclude embodiments through other function splits. Operations of the DU 210, operations of the RU 220, and signaling between the DU 210 and the RU 220 described below are not interpreted as being limited by a specific function split.

Hereinafter, the disclosure relates to a device and method for disabling at least one carrier for power saving in a base station system of a mobile communication network. For example, cells providing a plurality of carrier frequencies for servicing the same area (e.g., a sector area of the base station) may be set as one group, and carrier frequencies serviced by one RU within the group may be configured as a sub-group. Specifically, the disclosure describes a technology for controlling on/off in units of sub-groups or frequency bands (e.g., B3 (e.g., frequency division duplex (FDD), DL: 1710-1785 megahertz (MHz), UL: 1805-1880), N38 (e.g., time division duplex (TDD), 2570-2620 MHz), and N39 (e.g., TDD, 1880-1920MHz)) within the sub-group to save power.

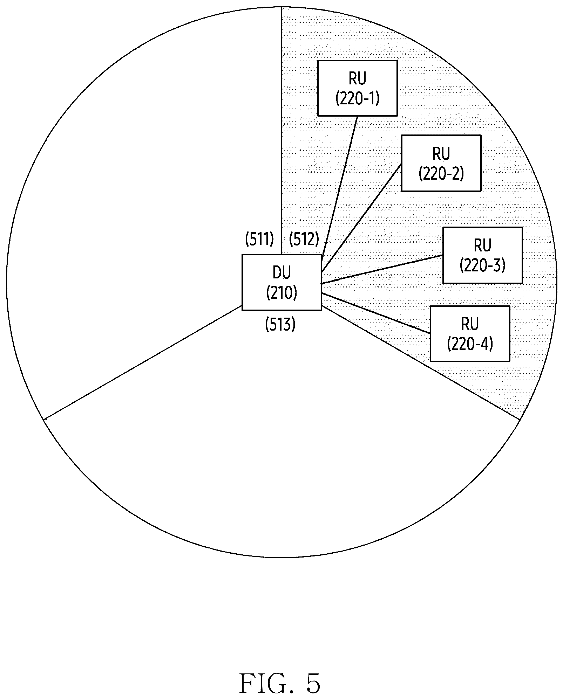

FIG. 5 illustrates an example of a service area by a DU and a plurality of RUs.

In FIG. 5, a DU (e.g., the DU 210) may provide a communication service on a plurality of service areas. For example, the DU 210 may provide the communication service to a terminal located on a first sector 511. The DU 210 may provide a cell through an RU connected to the DU 210. In the disclosure, enabling or disabling the cell may be used with the same meaning as enabling or disabling a carrier corresponding to a central frequency on a frequency domain of the cell. A coverage of the cell may correspond to at least a partial area of the first sector 511. For example, the DU 210 may provide the communication service to a terminal located on a second sector 512. The DU 210 may provide the cell through the RU connected to the DU 210. The coverage of the cell may correspond to at least a partial area of the second sector 512. For example, the DU 210 may provide the communication service to a terminal located on a third sector 513. The DU 210 may provide the cell through the RU connected to the DU 210. The coverage of the cell may correspond to at least a partial area of the third sector 513.

Cells (or carrier frequencies) providing the service in a co-located area may be set as one group. For example, cells providing the service within the first sector 511 may be set as a first group. For example, cells providing the service within the second sector 512 may be set as a first group. For example, cells providing the service within the third sector 513 may be set as a first group. Hereinafter, cells providing the service within the second sector 512 will be described as an example.

A group may be divided into a plurality of sub-groups. According to embodiments, each sub-group may correspond to the RU. As an example, different RUs may correspond to different sub-groups. Cells (or carriers) provided by a first RU may be classified into a first sub-group, and cells (or carriers) provided by a second RU different from the first RU may be classified into a second sub-group. For example, even if cells (or carriers) of two or more frequency bands are provided in one RU (i.e., even if the one RU supports dual-band), the cells (or carriers) of two or more frequency bands may all be set as one sub-group. Hereinafter, the sub-group is described as specific to the RU, but the embodiments of the disclosure are not limited thereto. According to a further embodiment, each sub-group may correspond to the frequency band. For example, cells in one frequency band may be provided in one RU. Since one frequency band is specific to one RU, in the example, the sub-group may correspond to the RU. For another example, two or more frequency bands may be provided in one RU. That is, the RU may support dual-band. For example, two frequency bands within one RU may correspond to different sub-groups. As an example, cells (or carriers) in a first frequency band provided by the RU may be classified into the first sub-group, and cells (or carriers) in a second frequency band provided by the RU and different from the first frequency band may be classified into the second sub-group.

A group including cells (or carriers) for providing one service area may be set. For example, the group may be set through software (SW)D of the DU 210 (e.g., operation administration maintenance (OAM)). The DU 210 may identify frequency bands (cells and carriers) within the group. The DU 210 may be connected to a plurality of RUs. For example, the DU 210 may be connected to RUs corresponding to frequency bands for servicing the second sector 512 (e.g., the first RU 220-1, the second RU 220-2, the third RU 220-3, and the fourth RU 220-4). The first RU 220-1, the second RU 220-2, the third RU 220-3, and the fourth RU 220-4 illustrate the RU 220 of FIG. 2. For example, the first RU 220-1 may provide one or more cells of the first frequency band (e.g., an 800 MHz band). In addition, the first RU 220-1 may provide one or more cells of the second frequency band (e.g., a 900 MHz band). For example, the second RU 220-2 may provide one or more cells of a third frequency band (e.g., a 1300 MHz band). For example, the third RU 220-3 may provide one or more cells of a fourth frequency band (e.g., a 1900 MHz band). For example, the fourth RU 220-4 may provide one or more cells of a fifth frequency band (e.g., a 2600 MHz band).

According to an embodiment, the DU 210 may distinguish a group of cells (or carriers) for servicing the second sector 512 into sub-groups, as follows. Each sub-group may be divided by an RU hardware provided.

[Table 1]

| sub-group | frequency band including carrier |
|---|---|
| sub-group #0 | first frequency band (e.g., 800MHz) second frequency band (e.g., 900MHz) |
| sub-group #1 | third frequency band (e.g., 1300MHz) |
| sub-group #2 | fourth frequency band (e.g., 1900MHz) |
| sub-group #3 | fifth frequency band (e.g., 2600MHz) |

According to another embodiment, the DU 210 may distinguish a group of cells (or carriers) for servicing the second sector 512 into sub-groups, as follows. Each sub-group may be divided by a frequency band.

[Table 2]

| sub-group | frequency band including carrier |
|---|---|
| sub-group #0 | first frequency band (e.g., 800MHz) |
| sub-group #1 | second frequency band (e.g., 900MHz) |
| sub-group #2 | third frequency band (e.g., 1300MHz) |
| sub-group #3 | fourth frequency band (e.g., 1900MHz) |
| sub-group #4 | fifth frequency band (e.g., 2600MHz) |

A plurality of cells (or carriers) may be used to service a specific area. However, in a low-traffic situation (e.g., late-night hours), all of the plurality of cells may not be used. When the RU operates to use all cells even in the low-traffic situation, power consumption may be wasted. In addition, the higher the frequency band, the smaller the geographic area serviced by a cell of a corresponding frequency band, that is, the smaller the coverage. This is because the higher the frequency of a wireless signal, the more difficult it is to diffract the frequency of the wireless signal. Therefore, enabling the RU having a low frequency or disabling the RU providing a relatively high frequency band is advantageous in terms of securing service coverage. In the same way, enabling the RU providing a relatively low frequency band is also advantageous in terms of securing service coverage. Disabling the RU providing a high frequency band or enabling the RU providing a low frequency band unconditionally may be inefficient in terms of a traffic control perspective. Therefore, the disclosure may be directed to a system and method for adaptively enabling or disabling the RU in consideration of a trade-off between coverage and traffic according to the frequency band.

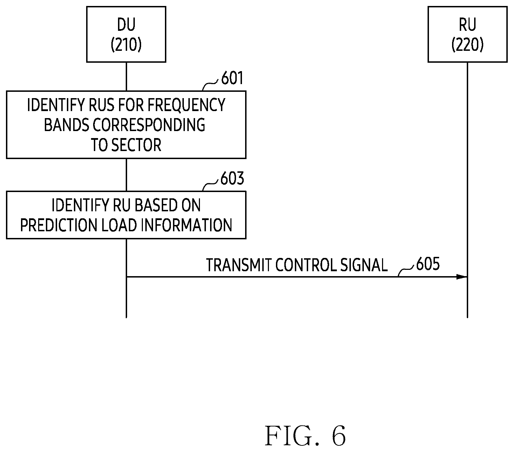

FIG. 6 illustrates an example of signaling for controlling an RU based on prediction load information. In FIG. 6, operations of a DU (e.g., the DU 210) for controlling the RU based on the prediction load information are described.

In FIG. 6, in operation 601, the DU 210 may identify RUs for frequency bands corresponding to a sector. The DU 210 may identify co-located frequency bands to service the sector. The DU 210 may set cells (or carriers) of the frequency bands as one group. The DU 210 may monitor the traffic load of cells within the group. The DU 210 may identify RUs configured to provide the frequency bands among a plurality of RUs connected to the DU 210.

In operation 603, the DU 210 may identify the RU based on the prediction load information. The DU 210 may divide the group into a plurality of sub-groups. For example, the DU 210 may divide the group into a plurality of sub-groups so that one sub-group corresponds to one RU. In addition, for example, the DU 210 may divide the group into a plurality of sub-groups so that one frequency band corresponds to one sub-group.

The DU 210 may identify a sub-group (hereinafter, referred to as a first sub-group) having the highest priority among the sub-groups. According to an embodiment, the priority may be determined by a high and low of frequency band. For example, when the frequency value of the first frequency band (e.g., center frequency, highest frequency) is higher than the frequency value of the second frequency band, the priority of the sub-group providing the first frequency band may be higher than the priority of the sub-group providing the second frequency band. In addition, according to an embodiment, the priority may be preset by an operator managing the DU 210. In addition, according to an embodiment, the priority may be determined by the number of connected terminals. For example, when the number of terminals connected to the first RU is greater than the number of terminals connected to the second RU, the priority of the sub-group corresponding to the first RU may be higher than the priority of the sub-group corresponding to the second RU.

The DU 210 may calculate prediction load information for the first sub-group having the highest priority. In the disclosure, the prediction load information means load information in case that cells corresponding to the corresponding sub-group are disabled. For example, the prediction load information means a ratio of the total physical resource block (PRB) usage of enabled cells in the group to a capacity value obtained by excluding the capacity of cells corresponding to the corresponding sub-group from the total capacity of enabled cells in the group. As an example, the prediction load information may be determined based on a following equation.

[Equation 1]

$$\frac{\sum All\ Enabled\ Cells\ in\ the\ Group\ Total\ PRB\ usage}{\sum All\ Enabled\ Cells\ in\ the\ Group\ Total\ PRB\ capacity\ -\ Off\ Candidate\ Sub\ Group\ Total\ PRB\ capacity}$$

The '$\Sigma$ *All Enabled Cells in the Group Total PRB usage*' may denote the PRB usage of all of the enabled cells in the group of the corresponding sub-group, the '$\Sigma$ *All Enabled Cells in the Group Total PRB capacity*' may denote the PRB capacity of all of the enabled cells, and the '*Off Candidate Sub Group Total PRB capacity*' may denote the PRB capacity of the at least one cell of the RU of the corresponding sub-group (e.g., the first sub-group).

When the prediction load information for the first sub-group is less than an off-threshold, the DU 210 may determine to disable the RU (hereinafter, referred to as the first RU) for the first sub-group. However, when the prediction load information for the first sub-group is greater than or equal to the off-threshold, the DU 210 may identify the second sub-group of the following priority. When the prediction load information for the second sub-group is less than the off-threshold, the DU 210 may determine to disable the RU (hereinafter, referred to as the second RU) for the second sub-group. However, when the prediction load information for the second sub-group is greater than or equal to the off-threshold, the DU 210 may identify the third sub-group of the following priority.

According to an embodiment, the off-threshold for identifying the RU to be disabled may be set by the DU 210. For example, the off-threshold may be sub-group specific. In other words, an independent off-threshold may be set for each sub-group. For another example, the off-threshold may be common to all sub-groups. The DU 210 may set one off-threshold for all sub-groups. According to another embodiment, the off-threshold for identifying the RU to be disabled may be set in the RU 220 by itself. For example, the off-threshold may be sub-group specific. In other words, an independent off-threshold may be set for each sub-group.

As described above, the DU 210 may repeat the determination procedure for sub-groups in order of priority of the frequency band. For example, the DU 210 may repeatedly perform operation of calculating prediction load information and comparison operation until the RU having prediction load information equal to or less than the off-threshold is identified. The DU 210 may identify an RU for disabling (e.g., the RU 220) among the RUs configured to provide the frequency bands. For example, the DU 210 may identify a candidate RU based on a priority of each frequency band. Even if the candidate RU is disabled, when the total load in the group is equal to or less than a certain level, the DU 210 may disable the candidate RU.

The DU 210 may not only disable a specific sub-group (e.g., cells of the RU to be disabled), but may also enable an already disabled sub-group. According to an embodiment, the DU 210 may identify a sub-group (hereinafter, referred to as a fourth sub-group) having the lowest priority. The DU 210 may calculate load information for the fourth sub-group having the highest priority. In the disclosure, load information means load information on enabled cells within a group to which the corresponding sub-group belongs. The load information may be referred to as average load information of a group or group load information. For example, the load information means a ratio of the total PRB usage of the enabled cells to the total capacity of the enabled cells within the group. For example, the load information may be determined based on a following equation.

[Equation 2]

$$\frac{\sum All\ Enabled\ Cells\ in\ the\ Group\ Total\ PRB\ usage}{\sum All\ Enabled\ Cells\ in\ the\ Group\ Total\ PRB\ capacity}$$

The '$\Sigma$ *All Enabled Cells in the Group Total PRB usage*' may denote the PRB usage of all of the enabled cells of the corresponding sub-group, and the '$\Sigma$ *All Enabled Cells in the Group Total PRB capacity*' may denote the PRB capacity of all of the enabled cells. Herein, all enabled cells may include cells of the corresponding sub-group.

When the group load information is less than an on-threshold, the DU 210 may determine to enable the RU (hereinafter, referred to as the fourth RU) for the fourth sub-group. The on-threshold may be a value corresponding to the fourth sub-group. However, when the group load information is greater than or equal to the on-threshold corresponding to the fourth sub-group, the DU 210 may identify a fifth sub-group having a lower priority after the fourth sub-group. When the group load information is less than the on-threshold corresponding to the fifth sub-group, the DU 210 may determine to enable the RU (hereinafter, referred to as a fifth RU) for the fifth sub-group. However, when the group load information is greater than or equal to the on-threshold corresponding to the fifth sub-group, the DU 210 may identify a sixth sub-group having a lower priority after the fifth sub-group.

According to an embodiment, the on-threshold for identifying the RU to be enabled may be set by the DU 210. For example, the on-threshold may be sub-group specific. In other words, an independent on-threshold may be set for each sub-group. According to another embodiment, the on-threshold for identifying the RU to be enabled may be set in the RU by itself. For example, the on-threshold may be sub-group specific. In other words, an independent on-threshold may be set for each sub-group.

As described above, the DU 210 may repeat the determination procedure for sub-groups in order of priority of the frequency band. For example, the DU 210 may repeatedly perform operation of calculating load information and comparison operation until the RU having load information greater than or equal to the on-threshold is identified. The DU 210 may identify an RU to be enabled (e.g., the RU 220) among the RUs configured to provide the frequency bands. For example, the DU 210 may identify the candidate RU based on the priority of each frequency band. When the total load in the group is greater than or equal to a certain level, the DU 210 may enable the candidate RU.

In operation 605, the DU 210 may transmit a control signal to the identified RU 220. The DU 210 may identify the RU 220 to be enabled or disabled among a plurality of RUs.

According to an embodiment, the RU 220 may be an RU identified for disabling. The control signal may be a control signal for disabling the RU 220 or a frequency band of the RU 220. For example, when one sub-group corresponds to one RU, the control signal may include identification information on the RU 220. For example, when one sub-group corresponds to one frequency band, the control signal may include identification information on the RU 220 or may include identification information on the RU 220 and identification information on the frequency band to be disabled. The RU 220 may disable one or more cells based on the control signal. For example, the RU 220 may turn off power authorized to at least one component (e.g., the RF transceiver) of the RU 220. In another example, the RU 220 may block a communication path authorized to the at least one component (e.g., the RF transceiver) of the RU 220. A method of disabling is not limited to the above-described examples, and various technologies for disabling a cell (or carrier) may be used for embodiments of the disclosure.

According to an embodiment, the RU 220 may be an RU identified for enabling. The control signal may be a control signal for enabling the RU 220 or the frequency band of the RU 220. For example, when one sub-group corresponds to one RU, the control signal may include identification information on the RU 220. In another example, when one sub-group corresponds to one frequency band, the control signal may include identification information on the RU 220 or may include identification information on the RU 220 and identification information on the frequency band to be enabled. The RU 220 may enable one or more cells based on the control signal. For example, the RU 220 may turn on power authorized to at least one component (e.g., the RF transceiver) of the RU 220. In another example, the RU 220 may unblock the communication path authorized to the at least one component (e.g., the RF transceiver) of the RU 220. A method of enabling is not limited to the above-described examples, and various technologies for enabling a cell (or carrier) may be used for embodiments of the disclosure.

In a mobile communication base station environment operated by cells having a plurality of frequencies, an off-operation may be performed for the purpose of reducing power consumption according to a traffic load. Depending on the access distribution of a terminal (e.g., the terminal 120), signal environment, and operating specifications, the traffic load of the carrier may vary. For example, if a traffic load of a carrier of the frequency in which disabling (i.e., carrier off) is not preferred is relatively lower than a traffic load of a carrier of the frequency in which disabling is preferred, opportunities to perform carrier off are not guaranteed for the frequency where carrier off is not preferred, and thus opportunities to reduce power consumption may be reduced. Whether to prefer disabling may be determined according to the frequency. As disabling is preferred, the priority for the corresponding carrier may be set higher. Similarly, even in a case that carrier enabling (i.e., carrier-on) is used for traffic distribution due to an increase in traffic load, enabling is required in the order of preferred frequencies with high power consumption efficiency.

A base station (e.g., the DU 210) may determine whether to disable the sub-group having the highest priority among the sub-groups in an on state. In case that it is assumed that the sub-group is disabled, the base station may disable cells (carriers) belonging to the sub-group when the prediction load information is lower than the off-threshold. The base station may determine whether to enable the sub-group having the lowest priority among the sub-groups in an off state. When average load information is equal to or greater than the on-threshold, the base station may enable cells (carriers) belonging to the sub-group.

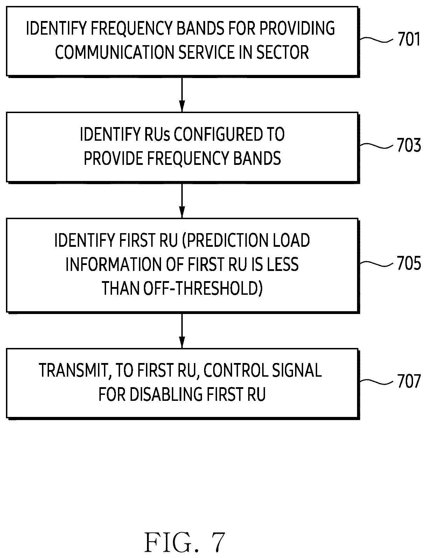

FIG. 7 illustrates an operation flow of a DU for disabling an RU based on prediction load information. The DU illustrates the DU 210. It is assumed that the RU, which is a target of disabling, is in an enabled state. In FIG. 7, an example in which a sub-group corresponds to one RU is described, but embodiments of the disclosure are not limited thereto. For another example, the sub-group may be a frequency band of the RU. Even in a case of the sub-group corresponds to one frequency band, it goes without saying that the operations described below may be applied.

In FIG. 7, in operation 701, the DU 210 may identify frequency bands for providing a communication service in a sector. The DU 210 may identify one or more cells capable of providing a communication service to at least a partial area within the sector. The DU 210 may set the one or more cells as one group. Each cell has a carrier frequency. A frequency band to which the carrier frequency belongs may be identified. The DU 210 may identify frequency bands for the one or more cells.

In operation 703, the DU 210 may identify RUs for providing frequency bands. For example, a plurality of RUs may be connected to the DU 210. Each RU may be in charge of one or more communication frequency bands. The DU 210 may identify RUs providing the frequency bands identified in operation 701. The DU 210 may identify RUs providing the frequency bands (e.g., the first RU 220-1, the second RU 220-2, the third RU 220-3, and the fourth RU 220-4 of FIG. 5) among a plurality of RUs connected to the DU 210. The DU 210 may divide the carriers of the set group into sub-groups. For example, each sub-group may correspond to one RU.

In operation 705, the DU 210 may identify the first RU whose prediction load information is less than an off-threshold. The DU 210 may set priorities for sub-groups or may identify preset priorities. In one embodiment, the priorities for the sub-groups may be determined according to whether the frequency of the frequency band provided by each sub-group is high or low. In one embodiment, the priorities for the sub-groups may be determined according to the number of cells provided by each sub-group. In one embodiment, the priorities for the sub-groups may be determined based on the total capacity provided by each sub-group.

The DU 210 may identify an RU providing the highest frequency band as a first candidate sub-group. The RU may be referred to as a first candidate RU. The DU 210 may calculate first prediction load information for the first candidate RU. For example, the DU 210 may calculate first prediction load information for the first candidate RU based on the Equation 1. The first candidate RU may correspond to a sub-group. When the first prediction load information for the first candidate RU is less than the off-threshold, the DU 210 may identify the first candidate RU as a first RU to be disabled. When the first prediction load information for the first candidate RU is greater than or equal to the off-threshold, the DU 210 may identify an RU providing a next higher frequency band than the first candidate RU as a second candidate RU. The DU 210 may calculate second prediction load information for the second candidate RU. When the second prediction load information for the second candidate RU is less than the off-threshold, the DU 210 may identify the second candidate RU as the first RU to be disabled. By repeating the above-described operations, the DU 210 may identify the first RU based on the priority and prediction load information of each frequency band.

In operation 707, the DU 210 may transmit a control signal for disabling the first RU to the first RU. The DU 210 may transmit the control signal through a fronthaul interface. The control signal may include identification information for indicating the first RU. According to a further embodiment, the control signal may further include information for indicating the frequency band to be disabled within the first RU.

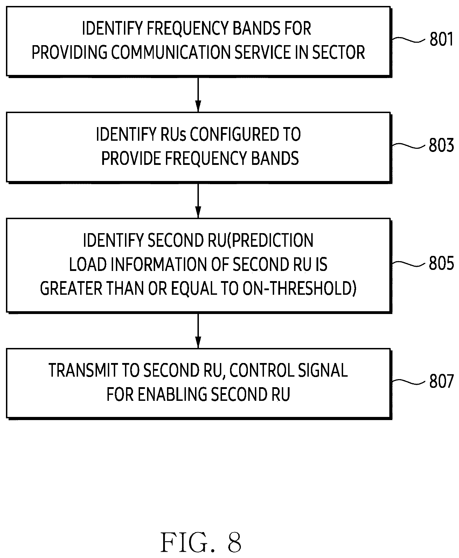

FIG. 8 illustrates an operation flow of a DU for enabling an RU based on prediction load information. The DU illustrates the DU 210. It is assumed that the RU, which is an enabling target, is in a disabled state. In FIG. 8, an example in which a sub-group corresponds to one RU is described, but embodiments of the disclosure are not limited thereto. For another example, the sub-group may be a frequency band of the RU. Even in a case of the sub-group corresponds to one frequency band, it goes without saying that the operations described below may be applied.

In FIG. 8, in operation 801, the DU 210 may identify frequency bands for providing a communication service in a sector. The DU 210 may identify frequency bands for providing the communication service in the sector. The DU 210 may identify one or more cells capable of providing the communication service to at least a partial area within the sector. The DU 210 may set the one or more cells as one group. Each cell has a carrier frequency. A frequency band to which the carrier frequency belongs may be identified. The DU 210 may identify frequency bands for the one or more cells.

In operation 803, the DU 210 may identify RUs for providing frequency bands. The DU 210 may identify the RUs for providing frequency bands. For example, a plurality of RUs may be connected to the DU 210. Each RU may be in charge of one or more communication frequency bands. The DU 210 may identify the RUs providing the frequency bands identified in operation 801. The DU 210 may identify the RUs providing the frequency bands (e.g., the first RU 220-1, the second RU 220-2, the third RU 220-3, and the fourth RU 220-4 of FIG. 5) among a plurality of RUs connected to the DU 210. The DU 210 may divide the carriers of the set group into sub-groups. For example, each sub-group may correspond to one RU.

In operation 805, the DU 210 may identify a second RU whose group load information is greater than or equal to an on-threshold. The DU 210 may set priorities for sub-groups or may identify preset priorities. For example, the priorities for the sub-groups may be determined according to whether the frequency of the frequency band provided by each sub-group is high or low. In addition, for example, the priorities for the sub-groups may be determined according to the number of cells provided by each sub-group. In addition, for example, the priorities for the sub-groups may be determined based on a total capacity provided by each sub-group.

The DU 210 may identify the RU providing the lowest frequency band as a first candidate sub-group. The RU may be referred to as a first candidate RU. The DU 210 may calculate group load information. For example, the DU 210 may calculate the group load information based on the Equation 2. The DU 210 may identify the first candidate RU as the second RU to be enabled when the group load information is greater than or equal to the on-threshold. The on-threshold may be specific to the sub-group. When the group load information is less than the on-threshold corresponding to the first candidate RU, the DU 210 may identify the RU providing the frequency band next lower than the first candidate RU as the second candidate RU. The DU 210 may identify the on-threshold corresponding to the second candidate RU. When the group load information is greater than or equal to the on-threshold corresponding to the second candidate RU, the DU 210 may identify the second candidate RU as the second RU to be enabled. By repeating the above-described operations, the DU 210 may identify the second RU based on the priority of each frequency band, group load information, and on-threshold for each sub-group.

In operation 807, the DU 210 may transmit a control signal for enabling the second RU to the second RU. The DU 210 may transmit the control signal through a fronthaul interface. The control signal may include identification information for indicating the second RU. According to a further embodiment, the control signal may further include information for indicating the frequency band to be enabled within the second RU.

A base station system according to embodiments of the disclosure may include a DU (e.g., the DU 210) and a plurality of RUs (e.g., the RU 220) connected to the DU. An RU may provide cells (or carriers) of one or more frequency bands. The DU may disable the cell(s) of at least one RU among RUs capable of providing service, or may disable the cell(s) of at least one frequency band among the one or more frequency bands. The disclosure may provide power saving performance by controlling enable or disable in units of the RU or the frequency band. In addition, the DU according to embodiments of the disclosure may provide more efficient power saving performance by sequentially enabling or disabling the RU or the frequency band in consideration of priority according to a traffic load and the frequency band.

Effects obtainable in the disclosure are not limited to the effects mentioned above, and other effects not mentioned will be clearly understood by those having ordinary knowledge in the art to which the disclosure belongs from the description below.

According to embodiments, a method performed by a distributed unit (DU) is provided. The method may comprise identifying frequency bands for providing a communication service in a sector. The method may comprise identifying a plurality of radio units (RUs) configured to provide the frequency bands. The method may comprise identifying a first RU of which prediction load information is less than an off-threshold, among the plurality of RUs based on a priority of each frequency band. The method may comprise transmitting, to the first RU through a fronthaul interface, a first control signal for disabling the first RU.

According to an embodiment, the identifying of the first RU may comprise identifying a first candidate RU configured to provide a highest frequency band among the plurality of RUs. The identifying of the first RU may comprise obtaining first prediction load information for the first candidate RU. The identifying of the first RU may comprise identifying the first candidate RU as the first RU in case that the first prediction load information for the first candidate RU is less than the off-threshold.

According to an embodiment, the identifying of the first RU may comprise identifying a second candidate RU, different from the first candidate RU, among the plurality of RUs, in case that the first prediction load information for the first candidate RU is greater than or equal to the off-threshold. The identifying of the first RU may comprise obtaining second prediction load information for the second candidate RU. The identifying of the first RU may comprise identifying the second candidate RU as the first RU in case that the second prediction load information for the second candidate RU is less than the off-threshold.

According to an embodiment, the prediction load information may be determined based on a PRB usage of all of enabled cells within the frequency bands, a PRB capacity of all of the enabled cells, and a PRB capacity of at least one cell of the first candidate RU.

According to an embodiment, the prediction load information may be determined based on a following equation.

[Equation 3]

$$\frac{\sum All\ Enabled\ Cells\ in\ the\ Group\ Total\ PRB\ usage}{\sum All\ Enabled\ Cells\ in\ the\ Group\ Total\ PRB\ capacity\ -\ Off\ Candidate\ Sub\ Group\ Total\ PRB\ capacity}$$

The '$\Sigma$ *All Enabled Cells in the Group Total PRB usage*' may denote the PRB usage of all of the enabled cells, the '$\Sigma$ *All Enabled Cells in the Group Total PRB capacity*' may denote the PRB capacity of all of the enabled cells, and the *'Off*

*Candidate Sub Group Total PRB capacity'* may denote the PRB capacity of the at least one cell of the first RU.

According to an embodiment, the method may comprise identifying a second RU of which group load information is greater than or equal to an on-threshold among at least one disabled RU. The method may comprise transmitting, to the second RU through the fronthaul interface, a second control signal for enabling the second RU.

According to an embodiment, the identifying of the second RU may comprise identifying a third candidate RU configured to provide a lowest frequency band among the at least one disabled RU. The identifying of the second RU may comprise identifying the third candidate RU as the second RU in case that the group load information is greater than or equal to the on-threshold corresponding to the third candidate RU.

According to an embodiment, the identifying of the second RU may comprise identifying a fourth candidate RU, different from the third candidate RU, among the at least one disabled RU in case that the group load information is less than the on-threshold corresponding to the third candidate RU. The identifying of the second RU may comprise identifying the fourth candidate RU as the second RU in case that the group load information is greater than or equal to the on-threshold corresponding to the fourth candidate RU.

According to an embodiment, the group load information may be determined based on a PRB usage of all of enabled cells within the frequency bands and a PRB capacity of all of the enabled cells.

According to an embodiment, the group load information may be determined based on a following equation.

[Equation 4]

$$\frac{\sum All\ Enabled\ Cells\ in\ the\ Group\ Total\ PRB\ usage}{\sum All\ Enabled\ Cells\ in\ the\ Group\ Total\ PRB\ capacity}$$

The '$\Sigma$ *All Enabled Cells in the Group Total PRB usage'* may denote the PRB usage of all of the enabled cells, and the '$\Sigma$ *All Enabled Cells in the Group Total PRB capacity'* may denote the PRB capacity of all of the enabled cells.

According to embodiments, an electronic device for a distributed unit (DU) is provided. The electronic device may comprise a memory, at least one transceiver supporting a fronthaul interface, and at least one processor coupled to the memory and the at least one transceiver. The at least one processor may be configured to identify frequency bands for providing a communication service in a sector. The at least one processor may be configured to identify a plurality of radio units (RUs) configured to provide the frequency bands. The at least one processor may be configured to identify a first RU of which prediction load information is less than an off-threshold, among the plurality of RUs based on a priority of each frequency band. The at least one processor may be configured to transmit, to the first RU through the fronthaul interface, a first control signal for disabling the first RU.

According to an embodiment, to identify the first RU, the at least one processor may be configured to identify a first candidate RU configured to provide a highest frequency band among the plurality of RUs. To identify the first RU, the at least one processor may be configured to obtain first prediction load information for the first candidate RU. To identify the first RU, the at least one processor may be configured to identify the first candidate RU as the first RU in case that the first prediction load information for the first candidate RU is less than the off-threshold.

According to an embodiment, to identify the first RU, the at least one processor may be configured to identify a second candidate RU, different from the first candidate RU, among the plurality of RUs, in case that the first prediction load information for the first candidate RU is greater than or equal to the off-threshold. To identify the first RU, the at least one processor may be configured to obtain second prediction load information for the second candidate RU. To identify the first RU, the at least one processor may be configured to identify the second candidate RU as the first RU in case that the second prediction load information for the second candidate RU is less than the off-threshold.

According to an embodiment, the prediction load information may be determined based on a PRB usage of all of enabled cells within the frequency bands, a PRB capacity of all of the enabled cells, and a PRB capacity of at least one cell of the first candidate RU.

According to an embodiment, the prediction load information may be determined based on a following equation.

[Equation 5]

$$\frac{\sum All\ Enabled\ Cells\ in\ the\ Group\ Total\ PRB\ usage}{\sum All\ Enabled\ Cells\ in\ the\ Group\ Total\ PRB\ capacity\ -\ Off\ Candidate\ Sub\ Group\ Total\ PRB\ capacity}$$

The '$\Sigma$ *All Enabled Cells in the Group Total PRB usage'* may denote the PRB usage of all of the enabled cells, the '$\Sigma$ *All Enabled Cells in the Group Total PRB capacity'* may denote the PRB capacity of all of the enabled cells, and the *'Off Candidate Sub Group Total PRB capacity'* may denote the PRB capacity of the at least one cell of the first RU.

According to an embodiment, the at least one processor may be configured to identify a second RU of which group load information is greater than or equal to an on-threshold among at least one disabled RU. The at least one processor may be configured to transmit, to the second RU through the fronthaul interface, a second control signal for enabling the second RU.

According to an embodiment, to identify the second RU, the at least one processor may be configured to identify a third candidate RU configured to provide a lowest frequency band among the at least one disabled RU. To identify the second RU, the at least one processor may be configured to identify the third candidate RU as the second RU in case that the group load information is greater than or equal to the on-threshold corresponding to the third candidate RU.

According to an embodiment, to identify the second RU, the at least one processor may be configured to identify a fourth candidate RU, different from the third candidate RU, among the at least one disabled RU in case that the group load information is less than the on-threshold corresponding to the third candidate RU. To identify the second RU, the at least one processor may be configured to identify the fourth candidate RU as the second RU in case that the group load information is greater than or equal to the on-threshold corresponding to the fourth candidate RU.

According to an embodiment, the group load information may be determined based on a PRB usage of all of enabled cells within the frequency bands and a PRB capacity of all of the enabled cells.

According to an embodiment, the group load information may be determined based on a following equation.

[Equation 6]

$$\frac{\sum All\ Enabled\ Cells\ in\ the\ Group\ Total\ PRB\ usage}{\sum All\ Enabled\ Cells\ in\ the\ Group\ Total\ PRB\ capacity}$$

The '$\Sigma$ *All Enabled Cells in the Group Total PRB usage*' may denote the PRB usage of all of the enabled cells, and the '$\Sigma$ *All Enabled Cells in the Group Total PRB capacity*' may denote the PRB capacity of all of the enabled cells.

Methods according to the embodiments described in the claim or description of the disclosure may be implemented in the form of hardware, software, or a combination of hardware and software.

In a case of implementing as software, a computer readable storage medium for storing one or more programs (software modules) may be provided. One or more programs stored in the computer readable storage medium is configured for execution by one or more processors in an electronic device. One or more programs include instructions for causing an electronic device to execute methods according to the embodiments described in the claim and description of the disclosure. The one or more programs may be provided by being included in a computer program product. The computer program product may be traded between a seller and a buyer as a commodity. The computer program product may be distributed in a form of a machine-readable storage medium (e.g., compact disc read only memory (CD-ROM)), or may be distributed online (e.g., downloaded or uploaded), through an application store (e.g., Play Store™) or directly between two user devices (e.g., smartphones). In a case of online distribution, at least some of the computer program product may be at least temporarily stored or temporarily generated in a machine-readable storage medium such as a manufacturer's server, an application store's server, or a relay server's memory.

Such programs (software modules, software) may be stored on random access memory, non-volatile memory including flash memory, read only memory (ROM), electrically erasable programmable read only memory (EEPROM), magnetic disc storage device, compact disc-ROM (CD-ROM), digital versatile discs (DVDs) or other form of optical storage device and magnetic cassette. Alternatively, it may be stored in a memory configured with a combination of some or all thereof. In addition, each configuration memory may be included in plurality.

In addition, the program may be stored in an attachable storage device accessible through a communication network such as the Internet, an intranet, local area network (LAN), wide area network (WAN), or a storage area network (SAN), or a communication network configured with a combination thereof. Such a storage device may be accessed to a device performing an embodiment of the disclosure through an external port. In addition, a separate storage device on the communication network may be connected to the device performing an embodiment of the disclosure.

In the specific embodiments of the disclosure described above, components included in the disclosure are expressed in singular or plural numbers according to the specific embodiment presented. However, the singular or plural expressions are selected appropriately for the presented situation for convenience of description, and the disclosure is not limited to the singular or plural components, and components expressed in a plurality may be configured with a singular number, or components expressed in a singular may be configured with plural numbers.

According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

In the detailed description of the disclosure, a specific embodiment has been described, but various modifications are possible within the limit not departing from the scope of the disclosure.

**Claims**

1. A method performed by a distributed unit (DU), the method comprising:

   identifying frequency bands for providing a communication service in a sector;
   identifying a plurality of radio units (RUs) configured to provide the frequency bands;
   identifying, based on a priority of each frequency band, a first RU of which prediction load information is less than an off-threshold, among the plurality of RUs; and
   transmitting, to the first RU, a first control signal for disabling the first RU.

2. The method of claim 1, wherein the identifying of the first RU comprises:

   identifying a first candidate RU configured to provide a highest frequency band, among the plurality of RUs;
   obtaining first prediction load information for the first candidate RU; and
   based on the first prediction load information for the first candidate RU being less than the off-threshold, identifying the first candidate RU as the first RU.

3. The method of claim 2, wherein the identifying of the first RU comprises:

   based on the first prediction load information being greater than or equal to the off-threshold, identifying a second candidate RU among the plurality of RUs, wherein the second candidate RU is different from the first candidate RU;
   obtaining second prediction load information for the second candidate RU; and
   based on the second prediction load information being less than the off-threshold, identifying the second candidate RU as the first RU.

4. The method of claim 2, wherein the first prediction load information of the first RU is determined based on a physical resource block (PRB) usage of all of enabled cells within the frequency bands, a PRB capacity of all of the enabled cells, and a PRB capacity of at least one cell of the first candidate RU.

5. The method of claim 4, wherein the prediction load information of the first RU is determined based on a following equation:

$$\frac{\sum All\ Enabled\ Cells\ in\ the\ Group\ Total\ PRB\ usage}{\sum All\ Enabled\ Cells\ in\ the\ Group\ Total\ PRB\ capacity - Off\ Candidate\ Sub\ Group\ Total\ PRB\ capacity},$$

   wherein the $\sum$ *All Enabled Cells in the Group Total PRB usage* is the PRB usage of all of the enabled cells, the $\sum$ *All Enabled Cells in the Group Total PRB capacity* is the PRB capacity of all of the enabled cells, and the *Off Candidate Sub Group Total PRB capacity* is the PRB capacity of the at least one cell of the first RU.

6. An electronic device of a distributed unit (DU), the electronic device comprising:

   a memory;
   at least one transceiver;
   at least one processor operatively connected to the memory and the at least one transceiver,
   wherein the at least one processor is configured to:

      identify frequency bands for providing a communication service in a sector;
      identify a plurality of radio units (RUs) configured to provide the frequency bands;
      identify, based on a priority of each frequency band, a first RU of which prediction load information is less than an off-threshold, among the plurality of RUs; and
transmit, to the first RU, a first control signal for disabling the first RU.

7. The electronic device of claim 6, wherein the at least one processor is further configured to:

   identify a first candidate RU configured to provide a highest frequency band among the plurality of RUs;
   obtain first prediction load information for the first candidate RU; and
   based on the first prediction load information being less than the off-threshold, identify the first candidate RU as the first RU.

8. The electronic device of claim 7, wherein the at least one processor is further configured to:

   based on the first prediction load information being greater than or equal to the off-threshold, identify a second candidate RU among the plurality of RUs, wherein the second candidate RU is different from the first candidate RU;
   obtain second prediction load information for the second candidate RU; and
   based on the second prediction load information being less than the off-threshold, identify the second candidate RU as the first RU.

9. The electronic device of claim 7, wherein the first prediction load information is determined based on a physical resource block (PRB) usage of all of enabled cells within the frequency bands, a PRB capacity of all of the enabled cells, and a PRB capacity of at least one cell of the first candidate RU.

10. The electronic device of claim 9, wherein the first prediction load information is determined based on a following equation:

$$\frac{\sum All\ Enabled\ Cells\ in\ the\ Group\ Total\ PRB\ usage}{\sum All\ Enabled\ Cells\ in\ the\ Group\ Total\ PRB\ capacity\ -Off\ Candidate\ Sub\ Group\ Total\ PRB\ capacity},$$

    wherein the $\sum$ *All Enabled Cells in the Group Total PRB usage* is the PRB usage of all of the enabled cells, the $\sum$ *All Enabled Cells in the Group Total PRB capacity* is the PRB capacity of all of the enabled cells, and the *Off Candidate Sub Group Total PRB capacity* is the PRB capacity of the at least one cell of the first RU.

11. The electronic device of claim 6, wherein the at least one processor is further configured to:

    identify a second RU of which group load information is greater than or equal to an on-threshold, among at least one disabled RU; and
    transmit, to the second RU, a second control signal for enabling the second RU.

12. The electronic device of claim 11, wherein the at least one processor is further configured to:

    identify a third candidate RU configured to provide a lowest frequency band among the at least one disabled RU; and
    based on the group load information being greater than or equal to the on-threshold corresponding to the third candidate RU, identify the third candidate RU as the second RU.

13. The electronic device of claim 12, wherein the at least one processor is further configured to:

    based on the group load information being less than the on-threshold corresponding to the third candidate RU, identify a fourth candidate RU among the at least one disabled RU, wherein the fourth candidate RU is different from the third candidate RU; and
    based on the group load information being greater than or equal to the on-threshold corresponding to the fourth candidate RU, identify the fourth candidate RU as the second RU.

14. The electronic device of claim 11, wherein the group load information is determined based on a physical resource block (PRB) usage of all of enabled cells within the frequency bands and a PRB capacity of all of the enabled cells.

15. The electronic device of claim 14, wherein the group load information is determined based on a following equation:

$$\frac{\sum All\ Enabled\ Cells\ in\ the\ Group\ Total\ PRB\ usage}{\sum All\ Enabled\ Cells\ in\ the\ Group\ Total\ PRB\ capacity},$$

and

wherein the $\sum$ *All Enabled Cells in the Group Total PRB usage* is the PRB usage of all of the enabled cells, and the $\sum$ *All Enabled Cells in the Group Total PRB capacity* is the PRB capacity of all of the enabled cells.

FIG. 1

FIG. 2

210

DU

310    320    330

| TRANSCEIVER | MEMORY | PROCESSOR |

FIG. 3A

220

RU

360

RF TRANSCEIVER

365

FRONTHAUL
TRANSCEIVER

370

MEMORY

380

PROCESSOR

FIG. 3B

FIG. 4

FIG. 5

EP 4 626 086 A1
24

```
┌──────────┐                              ┌──────────┐
│    DU    │                              │    RU    │
│   (210)  │                              │   (220)  │
└──────────┘                              └──────────┘
      │                                         │
      │      ⌐601                               │
┌─────────────────────────┐                     │
│ IDENTIFY RUS FOR FREQUENCY                    │
│  BANDS CORRESPONDING    │                     │
│      TO SECTOR          │                     │
└─────────────────────────┘                     │
      │      ⌐603                               │
┌─────────────────────────┐                     │
│   IDENTIFY RU BASED ON  │                     │
│ PREDICTION LOAD INFORMATION                   │
└─────────────────────────┘                     │
      │   TRANSMIT CONTROL SIGNAL  ⌐605         │
      │──────────────────────────────────────▶ │
      │                                         │
```

FIG. 6

IDENTIFY FREQUENCY BANDS FOR PROVIDING COMMUNICATION SERVICE IN SECTOR — 701

IDENTIFY RUs CONFIGURED TO PROVIDE FREQUENCY BANDS — 703

IDENTIFY FIRST RU (PREDICTION LOAD INFORMATION OF FIRST RU IS LESS THAN OFF-THRESHOLD) — 705

TRANSMIT, TO FIRST RU, CONTROL SIGNAL FOR DISABLING FIRST RU — 707

FIG. 7

IDENTIFY FREQUENCY BANDS FOR
PROVIDING COMMUNICATION SERVICE IN SECTOR ⌇ 801

IDENTIFY RUs CONFIGURED TO
PROVIDE FREQUENCY BANDS ⌇ 803

IDENTIFY SECOND RU(PREDICTION
LOAD INFORMATION OF SECOND RU IS
GREATER THAN OR EQUAL TO ON-THRESHOLD) ⌇ 805

TRANSMIT TO SECOND RU, CONTROL SIGNAL
FOR ENABLING SECOND RU ⌇ 807

FIG. 8

# INTERNATIONAL SEARCH REPORT

| International application No. |
| --- |
| **PCT/KR2023/015266** |

**A.     CLASSIFICATION OF SUBJECT MATTER**

**H04W 52/02**(2009.01)i; **H04W 24/08**(2009.01)i; **H04W 72/04**(2009.01)i; **H04L 5/00**(2006.01)i; **H04W 92/20**(2009.01)i

According to International Patent Classification (IPC) or to both national classification and IPC

**B.      FIELDS SEARCHED**

Minimum documentation searched (classification system followed by classification symbols)

H04W 52/02(2009.01); H04B 7/04(2006.01); H04L 43/00(2022.01); H04W 16/04(2009.01); H04W 16/08(2009.01); H04W 16/18(2009.01); H04W 24/00(2009.01); H04W 24/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 주파수 대역(frequency band), RU, 우선순위(priority), 예측 부하 정보(estimated load information), 임계값(threshold), 비활성화(deactivation)

**C.     DOCUMENTS CONSIDERED TO BE RELEVANT**

| Category* | Citation of document, with indication, where appropriate, of the relevant passages | Relevant to claim No. |
| --- | --- | --- |
| X <br> A | KR 10-2019-0030978 A (SAMSUNG ELECTRONICS CO., LTD.) 25 March 2019 (2019-03-25) <br> See paragraphs [0051]-[0062]; claims 1-2 and 6; and figure 5. | 1, 6 <br><br> 2-5,7-15 |
| A | KR 10-2015-0144653 A (KT CORPORATION) 28 December 2015 (2015-12-28) <br> See paragraphs [0048]-[0071]; and figures 3-4. | 1-15 |
| A | KR 10-2014-0015001 A (KT CORPORATION) 06 February 2014 (2014-02-06) <br> See paragraphs [0060]-[0084]; and figures 4-5. | 1-15 |
| A | KR 10-2014-0093554 A (KT CORPORATION et al.) 28 July 2014 (2014-07-28) <br> See paragraphs [0089]-[0097]; and figure 5. | 1-15 |
| A | KR 10-2016-0098418 A (HUAWEI TECHNOLOGIES CO., LTD.) 18 August 2016 (2016-08-18) <br> See paragraphs [0058]-[0076]; and figure 1. | 1-15 |

☐ Further documents are listed in the continuation of Box C.          ☑ See patent family annex.

| | |
| --- | --- |
| \*      Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **24 January 2024** | **24 January 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/015266**

| Patent document cited in search report | | | Publication date (day/month/year) | Patent family member(s) | | | Publication date (day/month/year) |
|---|---|---|---|---|---|---|---|
| KR | 10-2019-0030978 | A | 25 March 2019 | US | 10845860 | B2 | 24 November 2020 |
|  |  |  |  | US | 2019-0086984 | A1 | 21 March 2019 |
| KR | 10-2015-0144653 | A | 28 December 2015 | None | | | |
| KR | 10-2014-0015001 | A | 06 February 2014 | WO | 2014-017703 | A1 | 30 January 2014 |
| KR | 10-2014-0093554 | A | 28 July 2014 | None | | | |
| KR | 10-2016-0098418 | A | 18 August 2016 | CN | 103841582 | A | 04 June 2014 |
|  |  |  |  | CN | 103841582 | B | 21 November 2017 |
|  |  |  |  | EP | 3091777 | A1 | 09 November 2016 |
|  |  |  |  | EP | 3091777 | B1 | 03 January 2018 |
|  |  |  |  | JP | 2017-501638 | A | 12 January 2017 |
|  |  |  |  | JP | 6292642 | B2 | 14 March 2018 |
|  |  |  |  | US | 2016-0309350 | A1 | 20 October 2016 |
|  |  |  |  | US | 9888395 | B2 | 06 February 2018 |
|  |  |  |  | WO | 2015-101069 | A1 | 09 July 2015 |

Form PCT/ISA/210 (patent family annex) (July 2022)